# EUROPÄISCHE PATENTSCHRIFT

(11) **EP 1 541 906 B1**
(45) Veröffentlichungstag und Bekanntmachung des Hinweises auf die Patenterteilung: **19.03.2008**
(21) Anmeldenummer: 04026630.6
(22) Anmeldetag: 10.11.2004
(51) Int. Cl.: F16J 15/06

(54) **Dichtung zwischen einander gegenüberliegenden Dichtflächen**
Sealing between surfaces to be sealed.
Joint d'étanchéité entre deux surfaces opposées à étancher.

(30) Priorität: 11.12.2003 DE 10357881
(43) Veröffentlichungstag der Anmeldung: 15.06.2005
(73) Patentinhaber: Harting Electric GmbH & Co. KG, 32339 Espelkamp (DE)
(72) Erfinder: Dorniok, Ullrich, 28259 Bremen (DE); Quast, Frank, 33611 Bielefeld (DE); Schwettmann, Hartmut, 32369 Rahden (DE)

(56) Entgegenhaltungen:
- WO-A-89/08212

## Beschreibung

Die Erfindung betrifft eine Flanschdichtung zur Anordnung zwischen einander gegenüberliegenden Dichtflächen, für einen an einem Gehäuse vorgesehenen Gehäuseflansch und einer entsprechend ausgebildeten Montagewand.

Eine derartige Flanschdichtung wird benötigt, um bei der Montage eines mit einem Flansch versehenen Gehäuses, in dem beispielsweise sensible Bauteile angeordnet sind, eine sichere Abdichtung gegen äußere Industrieatmosphäre zu gewährleisten.

Es ist durchaus bekannt, zusammenfügbare und mit einem Flansch versehene Gehäuse mit einer zwischen den Flanschen angeordneten Dichtung gegen Umwelteinflüsse zu sichern.
Dabei ist aber nicht gewährleistet, dass die Schraubverbindungen, mit denen die Flansche überwiegend zusammengehalten werden, im Bereich der Durchführungen zwischen Schraube, Dichtung und Flansch ebenfalls umweltdicht sind.

Aus der DE 37 20 224 C2 ist eine Flanschdichtung für eine Rohrleitung bekannt, bei der ein innerer Dichtungsring aus Gummi oder Kunststoff vorgesehen ist, an dem eine U-förmige Dichtlippe angeformt ist, die in den Innenraum der Rohrleitung weist.

Weiterhin ist aus der WO 89/08212 ein Dichtungs-System bekannt, bei dem an einem umlaufenden Dichtungsring, der zwischen einer Montageeinheit und einer Abdeckhaube angeordnet ist, senkrecht dazu hervorstehende, rohrförmige Fortsätze angeformt sind, die in dazu vorgesehene Öffnungen der Abdeckhaube einsetzbar sind.

Dabei sind die Fortsätze innerhalb derer zusätzlich noch eine Hülse angeordnet ist, länger als die Materialstärke der Abdeckhaube, wobei beim Zusammenschrauben der Abdeckeinheit mit der Montageeinheit, der darüber hinaus stehende Teil beim Einsetzen einer Befestigungsschraube umgebördelt wird und eine Abdichtung des Schraubenbolzens bewirkt.

Der Erfindung liegt daher die Aufgabe zugrunde, eine Flanschdichtung der eingangs genannten Art dahingehend auszubilden, dass diese verliersicher an einem Flansch anzubringen ist, und dass die Flanschdichtung eine sichere Abdichtung an einer Befestigungsschraube gewährleistet, die in einer Durchgangsöffnung zur Befestigung des Flansches an einer Montagewand vorgesehen ist.

Diese Aufgabe wird dadurch gelöst, dass die Flanschdichtung eine Bodenplatte mit einem außen umlaufenden Kragen aufweist, an dem, beabstandet über der Bodenplatte, mindestens eine Flächenanformung vorgesehen ist, die mit der darunterliegenden Bodenfläche mindestens eine Tasche bildet, dass in der Tasche übereinander angeordnete Öffnungen vorgesehen sind, und dass mindestens eine der Öffnungen eine Dichtlippe aufweist.

Vorteilhafte Ausgestaltungen der Erfindung sind in den Ansprüchen 2 - 9 angegeben.

Die mit der Erfindung erzielten Vorteile bestehen zunächst darin, daß eine derartige Flanschdichtung verliersicher auf einen hier zunächst rechteckig ausgeführten Flansch aufgestülpt werden kann, wobei mittels in den Eckbereichen der Flanschdichtung ausgeformte taschenförmiger Ausbildungen über die Eckbereiche des Flansches reichen.
Somit ergibt sich eine montagefreundliche Handhabung, indem die Flanschdichtung auch bei einer Demontage auf dem Flansch gehalten ist.
Die taschenförmigen Ausbildungen weisen Öffnungen auf, die mit Durchführungsöffnungen des Flansches bzw. eines Anbaugehäuses fluchten.
In diese Öffnungen werden Befestigungsschrauben eingefügt, die aufgrund eines relativ kleinen Durchmessers gegenüber dem Durchmesser der Befestigungsschraube vorteilhaft im Bereich der Öffnungen gehalten werden. Dabei weist die auf dem Flansch aufliegende Öffnung der Flanschdichtung eine zum Schraubenkopf gerichtete wulstartige, umlaufende Erhöhung und eine tricherförmige Öffnung auf, die sich über die Materialstärke der Flanschdichtung erstreckt.

Im auslaufenden Bereich des Trichters ist eine Dichtlippe vorgesehen, die unterschiedliche Ausführungsformen aufweisen kann, abhängig vom Öffnungswinkel des Trichters, der von einem relativ stumpfen bis zu einem relativ flachen Winkel ausgeführt sein kann.
Bei einem flachen Winkel ist die Ausführung der Dichtlippe mit einem sehr dünnen Auslauf verbunden, so dass sich das Material sehr geschmeidig um den Bolzen einer Schraube anlegen kann.
Dabei ist der Innendurchmesser der Dichtlippe stets kleiner als der Durchmesser der Befestigungsschraube, um eine mehr oder weniger enge Anlage zu erzielen.
Somit wird je nach Anwendungsfall, eine hohe Dichtigkeit des Flansches einschließlich der Öffnungen für die Befestigungsschrauben erreicht. Weiterhin ist vorteilhafterweise, zumindest an der Längsseite der Flanschdichtung ein Steg vorgesehen, der entlang des zu montierenden Flansches verläuft und so die Flanschdichtung versteift und in einer optimalen Lage hält.
Da die Flanschdichtung als Spritzteil gefertigt wird, fallen bei der Herstellung keinerlei Abfallprodukte an.

Ein Ausführungsbeispiel der Erfindung ist in der Zeichnung dargestellt und wird im folgenden näher erläutert. Es zeigen:
- Fig. 1: ein Steckverbindergehäuse mit einer Flanschdichtung,
- Fig. 2a: eine perspektivische Darstellung der Flanschdichtung mit vier einzelnen Taschen,
- Fig. 2b: eine perspektivische Darstellung der Flanschdichtung mit einer umlaufenden Tasche,
- Fig. 2c: eine perspektivische Darstellung der Flanschdichtung mit zwei Taschen an den Schmalseiten,
- Fig. 3a: eine Dichtlippe aus der Flanschdichtung in einer Ausschnittvergrößerung,
- Fig. 3b: eine Variante der Dichtlippe,
- Fig. 3c: eine weitere Variante der Dichtlippe, und
- Fig. 4: eine vergrößerte Schnittdarstellung eines montierten Dichtungsflansches.

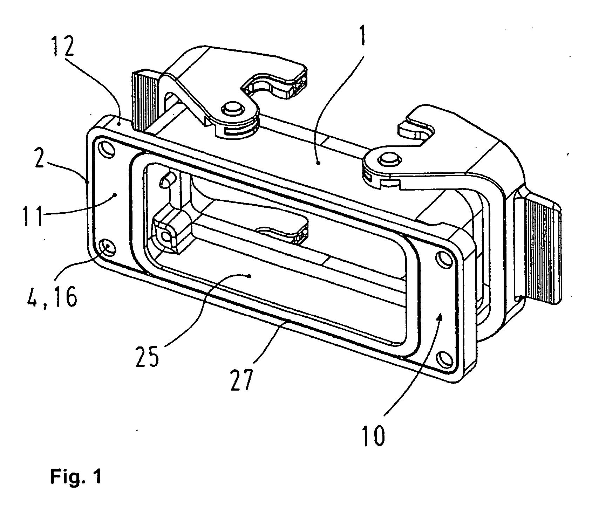

In der Fig. 1 ist in einer perspektivischen Darstellung ein Steckverbindergehäuse 1 mit einem umlaufenden Gehäuseflansch 2 gezeigt, auf dem eine erfindungsgemäße Flanschdichtung 10 verliersicher aufgestülpt ist.
Die Flanschdichtung weist eine Bodenplatte 11 mit einem daran rechtwinklig angeformten Kragen 12, sowie Öffnungen 16 auf, die mit Durchgangsöffnungen 4 in den Eckbereichen im Gehäuseflansch fluchten.
Die Bodenfläche 11 zeigt Dichtungsstege 27, die zum einen eine stabilisierende Wirkung auf die Flanschdichtung ausüben und zum anderen den Außenbereich, sowie den Innenbereich mit dem Öffnungsausschnitt 25 gegeneinander abdichten.

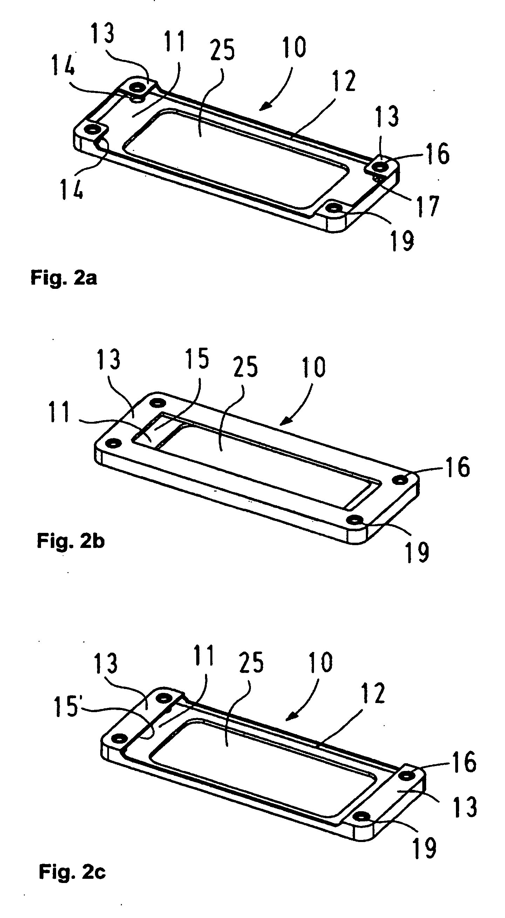

In den Fig. 2 a-c ist eine perspektivische Ansicht verschiedener Ausführungen der Flanschdichtung 10 dargestellt.
Die Flanschdichtung 10 in der Fig. 2a besteht aus einer flachen aus elastischem Material gefertigte Bodenplatte 11 mit einem Ausschnitt 25 sowie mit einem rechtwinklig dazu angeformten umlaufenden Kragen 12 an dem in den Eckbereichen Flächenanformungen 13 vorgesehen sind. Die Flächenanformungen sind beabstandet oberhalb der Bodenplatte angeordnet, wobei sie mit der Bodenplatte in den Eckbereichen der Flanschdichtung jeweils eine Tasche 14 bilden.
Die Taschen 14 weisen Öffnungen 16, 17 auf, die mit den Durchgangsöffnungen 4 im Gehäuseflansch 2 fluchten.

Erkennbar ist eine um die hier obere Öffnung 16 umlaufende, wulstähnliche Erhöhung 19 die weiter unten beschrieben ist.
Mittels der Taschen ist die Flanschdichtung auf dem entsprechend ausgebildeten Gehäuseflansch 2 unverlierbar zu montieren.

In einer Variante in der Fig. 2b ist eine Flanschdichtung vorgesehen, die eine umlaufende Flächenanformung 13 aufweist, womit eine umlaufende Tasche 15 gebildet ist, so dass der Gehäuseflansch komplett mit einer derartigen Flanschdichtung umgeben und abgedeckt ist.

In einer weiteren Variante ist in der Fig. 2c eine Flanschdichtung gezeigt, die an den beiden Schmalseiten eine durchgehende Flächenanformung 13 aufweist, die eine entsprechende Tasche 15 bildet, mit entsprechenden Öffnungen 16, für eine Montage auf dem Gehäuseflansch.

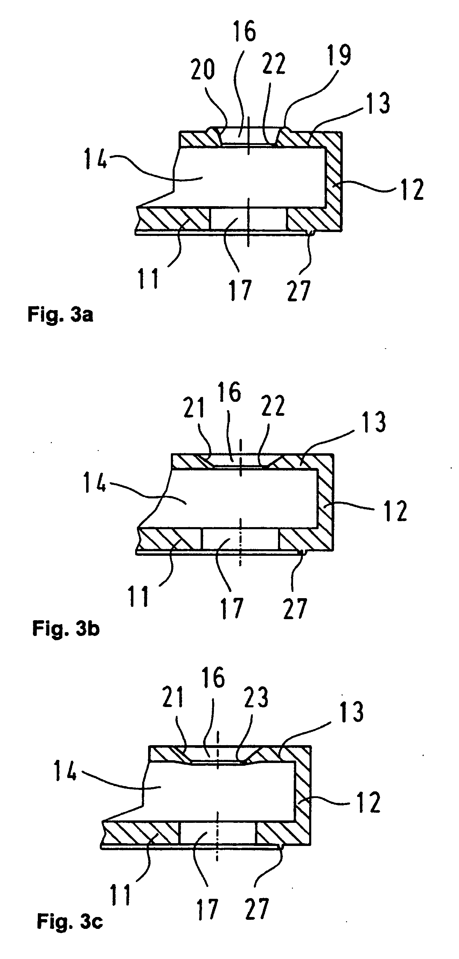

In den Fig. 3 a-c sind jeweils in einer vergrößerten Darstellung eines der Eckbereiche der Flanschdichtung 10 unterschiedlich ausgebildete Taschen 14 im Schnitt dargestellt.
Dabei sind die axial fluchtenden, übereinander angeordneten Öffnungen 16, 17 ersichtlich, wobei die hier unten gezeigte Öffnung 17 einen größeren Durchmesser aufweist als die obere.
Die obere Öffnung 16 ist derartig ausgestaltet, dass eine umlaufende Erhöhung 19 ausgebildet ist, von der sich eine verengende Trichterform 20 zu einer Dichtlippe 22 nach unten erstreckt.
Dabei ist vorgesehen, den Innendurchmesser der Dichtlippe 22 kleiner auszuführen als der Bolzendurchmesser 32 einer Befestigungsschraube 30, mit der die Flanschdichtung auf beispielsweise der Montagewand 7 befestigbar ist.
Durch die verengende Formgebung der Dichtlippe 22 wird die darin eingesteckte Befestigungsschraube 30 zunächst verliersicher gehalten.

Die Fig. 3b zeigt in einer Variante aus Fig. 3a eine Dichtlippe 22, die einen wesentlich flacheren Winkel mit der Trichterform 21 aufweist.

Die Fig. 3c zeigt eine Form bei der ein ebenfalls flacher Winkel mit einer Trichterform 21 vorgesehen ist, wobei jedoch die Dichtlippe 23 unterhalb des Niveaus der unteren Materialgrenze der Flächenanformung 13 ausgeformt ist.

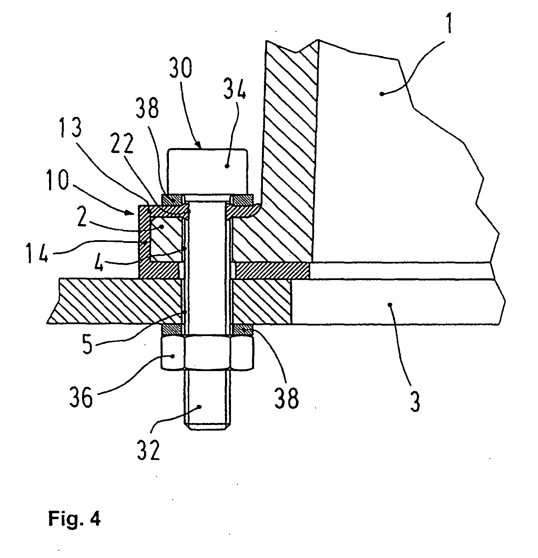

In der Fig. 4 ist ein stark vergrößerter Ausschnitt einer montierten Flanschdichtung 10 zwischen dem Steckergehäuse 1 und der Montagewand 7 gezeigt, wobei die Tasche 14 den Gehäuseflansch 2 umfasst.
Die Befestigungsschraube 30 ist bei einer Vormontage bereits in die Durchgangsöffnung 4 des Gehäuseflansches 2 eingeschoben, wobei die Schraube von der Dichtlippe 22 verliersicher gehalten ist.
Bei der Montage des Steckergehäuses 1 auf die Montagewand 7 legt sich zunächst beim Einschrauben der Befestigungsschraube 30 die zum Schraubenbolzen 32 gerichtete Dichtlippe 22 aus der Fig. 3a durch die Dehnung des kleineren Durchmessers der Dichtlippe gegenüber der Befestigungsschraube, eng an den Schraubenbolzen an.
Anschließend wird die Befestigungsschraube durch die Durchgangsöffnung 5 der Montagewand 7 gesteckt und rückwärtig mit der Scheibe 38 und der hier vorgesehenen Befestigungsmutter 36 verschraubt.
Der auf dem Gehäuseflansch 2 aufliegende Teil der Flächenanformung 13 der Flanschdichtung weist eine zur oberen Scheibe 38 gerichtete wulstartige, umlaufende Erhöhung 19 auf, die beim Festschrauben zunehmend fester zwischen der Scheibe 38 und der Flanschauflagefläche gegen den Schraubenbolzen zusammengedrückt wird.
Gleichzeitig wird die Dichtlippe 22 gegen den Schraubbolzen gedrückt und die Dichtigkeit der Flanschdichtung zur Durchgangsöffnung zunehmend erhöht.
Somit ist gewährleistet, dass über die Durchgangsöffnung 4 keinerlei Umwelteinflüsse von Außen ins Innere des Montagegehäuses 7 eindringen kann, wobei ein Schutzgrad von besser IP (Ingress Protection) 65 (DIN EN 60529) erreicht wird.

## Patentansprüche

1. Flanschdichtung (10) zur Anordnung zwischen einander gegenüberliegenden Dichtflächen, für einen an einem Gehäuse (1) vorgesehenen Gehäuseflansch (2) und einer entsprechend ausgebildeten Montagewand (3), **dadurch gekennzeichnet,**
**dass** die Flanschdichtung (10) eine Bodenplatte (11) mit einem außen umlaufenden Kragen (12) aufweist, an dem, beabstandet über der Bodenplatte, mindestens eine Flächenanformung (13) vorgesehen ist, die mit der darunter liegenden Bodenfläche mindestens eine Tasche (14) bildet,
**dass** in der Tasche (14) übereinander angeordnete Öffnungen (16, 17) vorgesehen sind, und
**dass** mindestens eine der Öffnungen (16) eine Dichtlippe (22, 23) aufweist.

2. Flanschdichtung nach Anspruch 1, **dadurch gekennzeichnet,**
**dass** zumindest die Öffnung (16) eine auf der Flächenanformung (13) umlaufende, wulstartige Erhöhung (19) aufweist.

3. Flanschdichtung nach Anspruch 1 oder 2, **dadurch gekennzeichnet, dass** die Öffnung (16) eine Trichterform (20, 21) aufweist.

4. Flanschdichtung nach einem der vorstehenden Ansprüche, **dadurch gekennzeichnet,**
**dass** die Öffnung (16) unterschiedlich geformte Dichtlippen (22, 23) aufweist.

5. Flanschdichtung nach einem der vorstehenden Ansprüche, **dadurch gekennzeichnet,**
**dass** der Durchmesser der Öffnung (16) mit der Dichtlippe (22, 23) kleiner ist, als der Durchmesser der Öffnung (17).

6. Flanschdichtung nach einem der vorstehenden Ansprüche, **dadurch gekennzeichnet,**
**dass** die oberhalb der Bodenplatte (11) vorgesehene Flächenanformung (13) jeweils eine Tasche (14) in den Eckbebereichen der Flanschdichtung bildet.

7. Flanschdichtung nach einem der vorstehenden Ansprüche, **dadurch gekennzeichnet,**
**dass** oberhalb der Bodenplatte (11) an den beiden Schmalseiten eine Flächenanformung (13) vorgesehen ist, die jeweils eine durchgehende Tasche (15') bildet.

8. Flanschdichtung nach einem der vorstehenden Ansprüche, **dadurch gekennzeichnet,**
**dass** die oberhalb der Bodenplatte (11) vorgesehene Flächenanformung (13) als umlaufende Tasche (15) ausgebildet ist.

9. Flanschdichtung nach einem der vorstehenden Ansprüche, **dadurch gekennzeichnet,**
**dass** die Bodenplatte (11) an der Längsseite der Flanschdichtung mindestens einen umlaufender Steg (27) aufweist, der entlang des zu montierenden Flansches verläuft.

## Claims

1. A flange gasket (10) for arrangement between sealing surfaces located opposite each other, for a housing flange (2) provided on a housing (1) and a correspondingly formed mounting wall (3), **characterized in that**
the flange gasket (10) has a bottom plate (11) with a peripherally encircling collar (12) which, at a distance above the bottom plate, has at least one integrally moulded surface portion (13) provided thereon which forms at least one pocket (14) together with the bottom face lying underneath,
openings (16, 17) that are arranged one above the other are provided in the pocket (14), and
at least one of the openings (16) has a sealing lip (22, 23).

2. The flange gasket according to claim 1, **characterized in that**
at least the opening (16) has a surrounding bead-like raised portion (19) on the integrally moulded surface portion (13).

3. The flange gasket according to claim 1 or 2, **characterized in that**
the opening (16) has a funnel shape (20, 21).

4. The flange gasket according to any of the preceding claims, **characterized in that**
the opening (16) has sealing lips (22, 23) of different shapes.

5. The flange gasket according to any of the preceding claims, **characterized in that**
the diameter of the opening (16) with the sealing lip (22, 23) is smaller than the diameter of the opening (17).

6. The flange gasket according to any of the preceding claims, **characterized in that**
the integrally moulded surface portions (13) provided above the bottom plate (11) each constitute a pocket (14) in the corner regions of the flange gasket.

7. The flange gasket according to any of the preceding claims, **characterized in that**
provided above the bottom plate (11) on the two narrow sides is a respective integrally moulded surface portion (13) which each forms a continuous pocket (15').

8. The flange gasket according to any of the preceding claims, **characterized in that**
the integrally moulded surface portion (13) provided above the bottom plate (11) is in the form of a peripherally surrounding pocket (15).

9. The flange gasket according to any of the preceding claims, **characterized in that**
the bottom plate (11) has at least one circumambient web (27) on the long side of the flange gasket, the web (27) extending along the flange to be mounted.

## Revendications

1. Garniture d'étanchéité de bride (10) destinée à être agencée entre deux surfaces d'étanchéité opposées pour une bride de boîtier (2) prévue sur un boîtier (1) et pour une paroi de montage (3) réalisée de manière correspondante, **caractérisée en ce que**
la garniture d'étanchéité de bride (10) présente une plaque de fond (11) avec une collerette (12) périphérique sur l'extérieur sur laquelle, à distance au-dessus de la plaque de fond, est prévue au moins une conformation de surface (13) qui forme avec la surface de fond située au-dessous au moins une poche (14),
**en ce que** dans la poche (14) sont prévues des ouvertures (16, 17) agencées l'une au-dessus de l'autre, et
**en ce qu'**au moins une des ouvertures (16) présente une lèvre d'étanchéité (22, 23).

2. Garniture d'étanchéité de bride selon la revendication 1, **caractérisée en ce que**
au moins l'ouverture (16) présente un relief (19) en forme de bourrelet à la périphérie de la conformation de surface (13).

3. Garniture d'étanchéité de bride selon la revendication 1 ou 2, **caractérisée en ce que**
l'ouverture (16) présente une forme d'entonnoir (20, 21).

4. Garniture d'étanchéité de bride selon l'une des revendications précédentes, **caractérisée en ce que**
l'ouverture (16) présente des lèvres d'étanchéité (22, 23) de différentes formes.

5. Garniture d'étanchéité de bride selon l'une des revendications précédentes, **caractérisée en ce que**
le diamètre de l'ouverture (16) avec la lèvre d'étanchéité (22, 23) est plus petit que le diamètre de l'ouverture (17).

6. Garniture d'étanchéité de bride selon l'une des revendications précédentes, **caractérisée en ce que**
la conformation de surface (13) prévue au-dessus de la plaque de fond (11) forme une poche (14) respective dans les régions de coin de la garniture d'étanchéité de bride.

7. Garniture d'étanchéité de bride selon l'une des revendications précédentes, **caractérisée en ce que**
au-dessus de la plaque de fond (11) est prévue sur les deux petits côtés une conformation de surface (13) qui forme respectivement une poche (15') continue.

8. Garniture d'étanchéité de bride selon l'une des revendications précédentes, **caractérisée en ce que**
la conformation de surface (13) prévue au-dessus de la plaque de fond (11) est réalisée sous forme de poche périphérique (15).

9. Garniture d'étanchéité de bride selon l'une des revendications précédentes, **caractérisée en ce que**
la plaque de fond (11) présente sur le grand côté de la garniture d'étanchéité de bride au moins une moulure (27) périphérique qui s'étend le long de la bride à monter.
